# FASCICULE DE BREVET EUROPEEN

(11) **EP 3 486 099 B1**
(45) Date de publication et mention de la délivrance du brevet: **14.10.2020**
(21) Numéro de dépôt: 18194521.3
(22) Date de dépôt: 14.09.2018
(51) Int. Cl.: B60G 17/005, B60G 17/052, B60G 17/056, B60G 17/017

(54) **VÉHICULE ROUTIER DE TRANSPORT DE MARCHANDISES COMPRENANT UN HAYON ÉLÉVATEUR, ET PROCÉDÉ DE PILOTAGE ASSOCIÉ**
STRASSENFAHRZEUG FÜR DEN TRANSPORT VON WAREN, DAS EINE HECKKLAPPE MIT HUBMECHANISMUS UMFASST, UND ENTSPRECHENDES LENKVERFAHREN
ROAD VEHICLE FOR TRANSPORTING GOODS COMPRISING A TAIL LIFT, AND DRIVING METHOD THEREOF

(30) Priorité: 17.11.2017 FR 1760876
(43) Date de publication de la demande: 22.05.2019
(73) Titulaire: Jean Chereau SAS, 50220 Ducey (FR)
(72) Inventeur: BUISINE, François, 35140 SAINT AUBIN DU CORMIER (FR); LEROUX, François, 50300 Saint Senier Sous Avranches (FR)
(74) Mandataire: Casalonga

(56) Documents cités:
- WO-A1-92/12021

## Description

La présente invention concerne le domaine des véhicules routiers de transport de marchandises, tels que des camions, des semi-remorques, des remorques ou des porteurs.

Un véhicule routier de transport de marchandises comprend un châssis et une carrosserie montée sur le châssis et délimitant un espace de chargement intérieur.

L'espace de chargement intérieur de la carrosserie est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre une porte à un ou plusieurs battants ou encore un rideau coulissant.

Le châssis du véhicule comprend notamment deux longerons longitudinaux fixés sur le plancher de la carrosserie. Classiquement, le châssis est équipé d'un train roulant qui comprend au moins un essieu pour le support de roues et des suspensions d'essieu pneumatiques montées sur les longerons du châssis.

Chaque suspension d'essieu est équipée d'un bras de suspension supportant l'essieu associé et monté pivotant sur l'un des longerons du châssis par l'intermédiaire d'une main ou patte d'attache, et d'un coussin amortisseur, généralement nommé « coussin de suspension », interposé entre ce longeron et le bras de suspension.

Dans le cas d'un système pneumatique à régulation électronique, les coussins de suspension sont alimentés en air comprimé par un circuit pneumatique qui comprend notamment un réservoir de stockage de l'air et une électrovalve pilotée par une unité de contrôle électronique afin de remplir ou vider ces coussins de suspension, par exemple après modification de l'état de chargement de la carrosserie. La variation de pression dans les coussins de suspension permet de modifier l'écart de hauteur entre les essieux et le châssis.

De sorte à pouvoir également régler manuellement cet écart de hauteur, une télécommande ou un boitier de commande est prévu généralement à l'intérieur de la carrosserie. Ce réglage manuel nommé « monte-et-baisse » peut par exemple être réalisé lors d'une mise à quai du véhicule. A l'arrêt du véhicule, le réglage manuel est prioritaire sur le pilotage automatique de l'électrovalve.

Dans le cas d'un système pneumatique conventionnel, l'électrovalve est remplacée par une valve de nivellement commandée par un levier de commande qui est lui-même relié aux essieux par un système de tringlerie pour maintenir lors du roulage le châssis à une hauteur constante prédéfinie quel que soit l'état de chargement de la carrosserie. Dans ce type de suspension, le circuit pneumatique comprend un robinet ou valve monte-et-baisse de sorte à pouvoir modifier aussi manuellement la hauteur du châssis à l'arrêt du véhicule en alimentant en air ou en vidangeant les coussins de suspension.

Pour plus de détails sur de tels systèmes pneumatiques, on pourra par exemple se référer au document WO92/12021.

Par ailleurs, indépendamment du type de système pneumatique utilisé, pour faciliter le chargement et le déchargement des marchandises de l'espace intérieur de la carrosserie, le châssis est généralement équipé d'un hayon élévateur qui est installé à l'arrière de la carrosserie.

Classiquement, le hayon élévateur comprend un plateau de chargement/déchargement, deux bras qui assurent le maintien du plateau par rapport au châssis, et deux vérins hydrauliques parallèles aux bras et permettant d'obtenir le déplacement du plateau.

Lorsque le plateau du hayon élévateur est amené en contact contre le sol, les bras établissent une liaison mécanique entre le sol et le châssis du véhicule. Dans la pratique, il arrive que, dans la position abaissée du plateau du hayon élévateur contre le sol, l'utilisateur du véhicule modifie manuellement la hauteur du châssis par vidange des coussins de suspension.

Lors du dégonflage de ces coussins dans cette position abaissée du plateau, la charge supportée par les essieux est alors reprise par les bras du hayon élévateur. Dans ces conditions, les bras supportent donc le poids de l'ensemble du véhicule.

Or, les bras du hayon élévateur ne sont pas conçus pour résister mécaniquement à de tels efforts. Il existe donc un risque important de déformations des bras et des composants mécaniques du hayon élévateur. En outre, la fixation des bras du hayon élévateur au châssis du véhicule peut également être endommagée.

Ceci engendre des frais de réparation ou de changement du hayon élévateur, mais surtout l'immobilisation du véhicule qui représente un coût particulièrement important.

La présente invention vise à remédier à ces inconvénients.

L'invention a pour objet un véhicule routier de transport de marchandises comprenant un châssis, au moins un essieu monté sur le châssis et supportant des roues, au moins deux suspensions pneumatiques supportant ledit essieu et comprenant chacune un coussin de suspension, un système pneumatique pour le remplissage et la vidange des coussins de suspension, un moyen de commande à actionnement manuel pour actionner le système de suspension pneumatique, et un hayon élévateur et mobile entre une position de rangement et une position de sortie.

Selon une caractéristique générale, le véhicule comprend en outre au moins un moyen de détection pour détecter la position de rangement et/ou la position de sortie du hayon élévateur.

Selon une autre caractéristique générale, le véhicule comprend également des moyens d'inhibition pour rendre inopérant, en présence d'un signal du moyen de détection représentatif de la position de sortie du hayon élévateur, l'actionnement manuel du moyen de commande pour empêcher au moins la vidange des coussins de suspension.

On entend par « position de sortie » du hayon élévateur, la position du hayon lorsqu'il n'est pas dans sa position de rangement.

Par « moyens d'inhibition », on entend tous moyens permettant, lorsque le hayon élévateur est dans la position de sortie, de rendre sans effet l'actionnement manuel du moyen de commande de sorte à rendre impossible au moins la vidange des coussins de suspension.

Ainsi, lorsque le hayon élévateur n'est pas dans sa position de rangement, l'utilisateur du véhicule ne peut pas abaisser par une commande manuelle la hauteur du châssis.

Il est aussi possible de prévoir que les moyens d'inhibition sont aptes à rendre inopérant, lorsque le hayon élévateur n'est pas dans sa position de rangement, l'actionnement manuel du moyen de commande pour empêcher la vidange et le remplissage des coussins de suspension.

Selon une première conception, les moyens de régulation du système pneumatique comprennent au moins une électrovalve de régulation et une unité de contrôle électronique pour le pilotage de ladite électrovalve de régulation. Dans un mode de réalisation particulier, cette unité de contrôle électronique peut être l'unité de contrôle du système de freinage à commande électronique du véhicule.

Dans cette première conception du système pneumatique, les moyens d'inhibition peuvent comprendre une unité de commande électronique apte, en présence d'un signal d'activation du moyen de commande à actionnement manuel, à délivrer à l'unité de contrôle électronique du système pneumatique un signal de commande pour le pilotage de ladite électrovalve de régulation uniquement en présence d'un signal du moyen de détection représentatif de la position de rangement du hayon élévateur.

L'unité de commande électronique peut recevoir en entrée ledit signal d'activation du moyen de commande à actionnement manuel.

Alternativement, l'unité de contrôle électronique pourrait recevoir ces signaux d'activation et transmettre les données relatives à l'activation du moyen de commande à l'unité de commande électronique.

Dans une autre alternative, les signaux d'activation émis par le moyen de commande à actionnement manuel sont transmis à l'unité de contrôle électronique et l'unité de contrôle électronique est apte à piloter ladite électrovalve de régulation dans un position empêchant au moins la vidange des coussins de suspension uniquement en présence d'un signal du moyen de détection représentatif de la position de rangement du hayon élévateur. Dans cette alternative, l'unité de contrôle électronique forme les moyens d'inhibition.

Dans cette alternative, les signaux émis par le moyen de détection sont transmis à l'unité de contrôle électronique. Alternativement, lorsque le hayon est équipé d'une unité de contrôle qui lui est propre, les signaux émis par le moyen de détection peuvent être transmis à cette unité de contrôle qui délivre ensuite à l'unité de contrôle électronique les données relatives à la position de rangement ou de sortie qui est détectée par le moyen détecteur. Ces deux unités peuvent être couplées ou reliées entre elles par une connexion ou liaison de données par exemple de type filaire ou radioélectrique ou encore par l'intermédiaire de bus de communication.

Dans une variante de la première conception du système pneumatique, l'électrovalve de régulation est équipée d'un levier à actionnement manuel formant ledit moyen de commande, et les moyens d'inhibition comprennent au moins une électrovalve d'isolement normalement ouverte, et une unité de commande électronique pour piloter ladite électrovalve d'isolement et apte à l'activer, en présence dudit signal du moyen de détection représentatif de la position de sortie du hayon élévateur, pour isoler les coussins de suspension d'une conduite d'évacuation des gaz à l'extérieur.

Selon une deuxième conception, les moyens de régulation du système pneumatique comprennent au moins une valve de nivellement qui est reliée audit essieu par l'intermédiaire d'une tringlerie, et une valve à actionnement manuel formant ledit moyen de commande.

Avec une telle conception, les moyens d'inhibition peuvent comprendre au moins une électrovalve d'isolement normalement ouverte, et une unité de commande électronique pour piloter ladite électrovalve d'isolement et apte à l'activer, en présence dudit signal du moyen de détection représentatif de la position de sortie du hayon élévateur, pour isoler les coussins de suspension d'une conduite d'évacuation des gaz à l'extérieur.

Dans un mode de réalisation particulier, les signaux émis par le moyen de détection de la position du hayon élévateur sont transmis à l'unité de commande électronique. Alternativement, lorsque le hayon est équipé d'une unité de contrôle électronique qui lui est propre, les signaux émis par le moyen de détection peuvent être transmis à cette unité de contrôle qui délivre ensuite à l'unité de commande électronique les données relatives à la position de rangement ou de sortie qui est détectée par le moyen détecteur. Ces deux unités peuvent être couplées ou reliées entre elles par une connexion ou liaison de données par exemple de type filaire ou radioélectrique ou encore par l'intermédiaire de bus de communication.

Lesdites suspensions pneumatiques peuvent comprendre chacune un bras de suspension supportant ledit essieu. Le coussin de suspension de chaque suspension peut être interposé entre le bras associé et le châssis du véhicule. Le hayon élévateur peut par exemple être monté à l'arrière du châssis.

L'invention concerne également un procédé de pilotage d'un système de suspension pneumatique d'un véhicule routier de transport de marchandises équipé d'un hayon élévateur mobile entre une position de rangement et une position de sortie, le procédé comprenant les étapes suivantes :
- détecter la position de rangement et/ou la position de sortie du hayon élévateur,
- empêcher la vidange des coussins de suspension du système de suspension pneumatique en cas d'actionnement manuel dudit système lorsque le hayon élévateur est dans la position de sortie.

Dans un mode de mise en œuvre particulier, le procédé comprend également l'étape : empêcher le remplissage des coussins de suspension du système en cas d'actionnement manuel dudit système lorsque le hayon élévateur est dans la position de sortie.

La présente invention sera mieux comprise à l'étude de la description détaillée de modes de réalisation pris à titre d'exemples nullement limitatifs et illustrés par les dessins annexés, sur lesquels :
- la figure 1 est une vue schématique en coupe longitudinale de l'intérieur d'un véhicule routier de transport de marchandises selon un premier exemple de réalisation de l'invention,
- la figure 2 est une vue en perspective du véhicule routier de la figure 1,
- la figure 3 est une vue schématique en coupe longitudinale de l'intérieur du véhicule routier de la figure 1 dans une position d'utilisation d'un hayon élévateur,
- la figure 4 est une vue illustrant schématiquement le système pneumatique du véhicule de la figure 1, et
- les figures 5 et 6 sont des vues illustrant schématiquement le système pneumatique de véhicules selon des deuxième et troisième exemples de réalisation de l'invention.

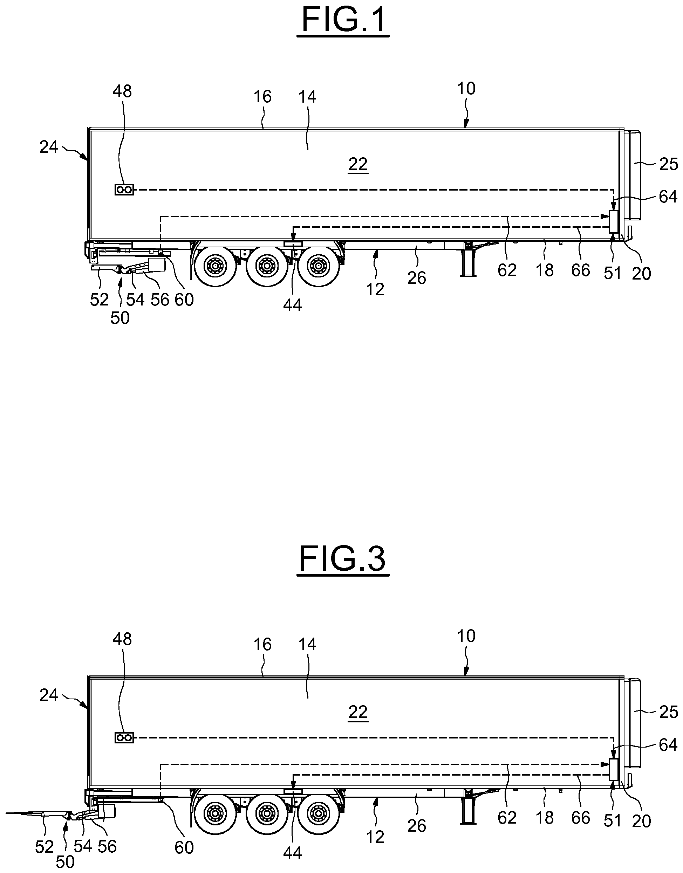

Sur les figures 1 à 3, on a représenté un véhicule comprenant une carrosserie 10 frigorifique et un châssis 12 porteur s'étendant longitudinalement et équipé de roues 13. La carrosserie 10 est montée sur le châssis 12.

La carrosserie 10 comprend deux flancs 14 verticaux opposés s'étendant longitudinalement, un plafond ou pavillon 16, un plancher 18, une face avant 20 et un cadre arrière nommé custode (non visible sur la figure) qui sont assemblés entre eux pour délimiter un espace de chargement 22 intérieur.

La carrosserie 10 comprend également un dispositif 24 de fermeture d'une ouverture ou accès arrière à l'espace de chargement 22. Le dispositif 24 de fermeture est mobile entre une position de fermeture de l'accès arrière et au moins une position d'ouverture. Dans l'exemple de réalisation illustré, le dispositif 24 de fermeture comprend une porte à deux battants articulés à rotation. En variante, le dispositif 24 de fermeture peut comprendre un rideau de fermeture coulissant.

La carrosserie 10 comprend ici un groupe ou machine frigorifique 25 pour envoyer de l'air à température régulée à l'intérieur de l'espace de chargement 22.

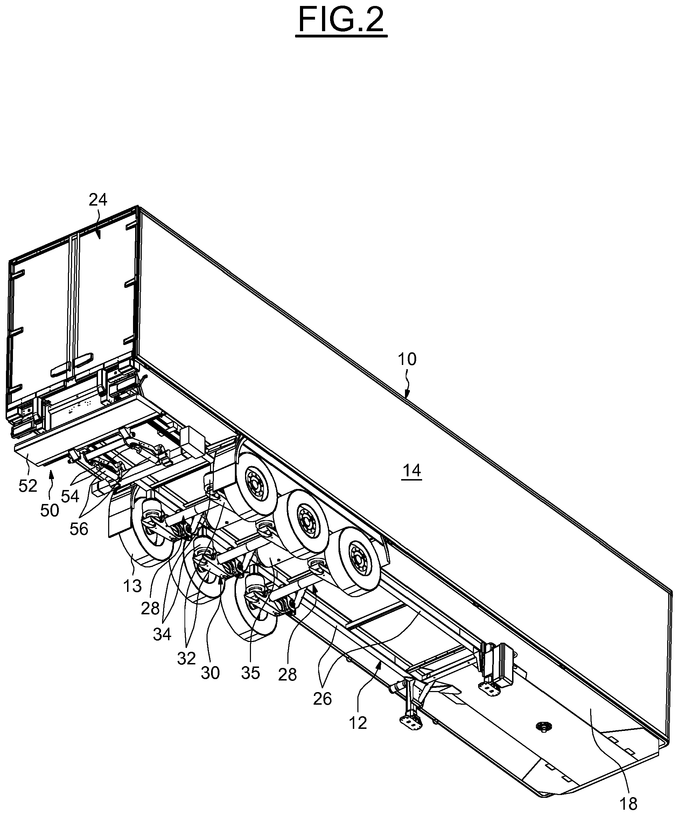

Comme illustré plus visiblement à la figure 2, le châssis 12 comprend notamment deux longerons 26 longitudinaux fixés sur le plancher 18 de la carrosserie. Le véhicule comprend également une pluralité d'essieux 28 équipés chacun de deux roues 13, et des suspensions d'essieu 30 pneumatiques fixées sur les longerons 26 du châssis. A chaque essieu 28 est associé deux suspensions d'essieu 30. Dans l'exemple de réalisation illustré, les essieux sont au nombre de trois. En variante, il est possible de prévoir un nombre différent d'essieux.

Chaque suspension d'essieu 30 comprend un bras de suspension 32 longitudinal supportant l'essieu 28 associé et articulé à rotation sur le châssis 12, ici par l'intermédiaire d'une patte d'attache fixée sur un des longerons 26. Chaque suspension d'essieu 30 comprend également un coussin de suspension 34 qui est interposé verticalement entre le bras de suspension 32 associé et le châssis, en l'espèce ce longeron 26. Le coussin de suspension 34 est du type pneumatique, ici à air. Chaque suspension d'essieu 30 comprend également un vérin amortisseur (non visible) articulé à l'une de ses extrémités sur le bras de suspension 32 et à l'autre extrémité sur la patte d'attache fixée au châssis 12.

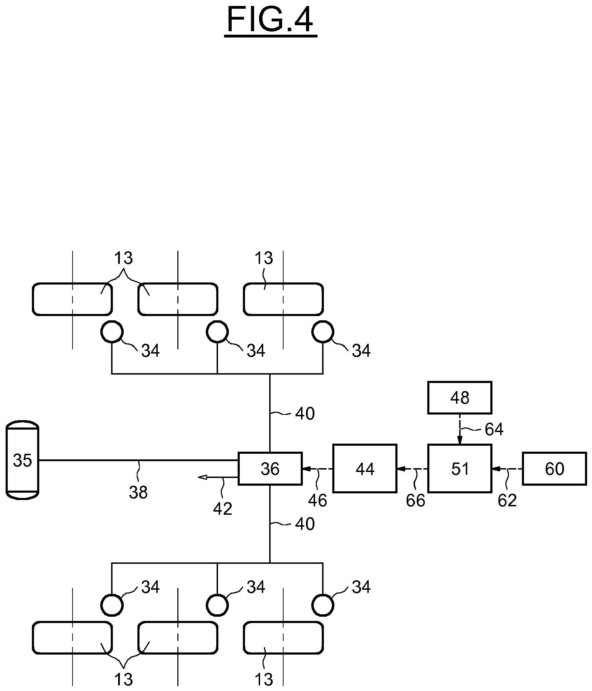

Comme illustré schématiquement à la figure 4, pour permettre l'alimentation en air des coussins de suspension 34, le véhicule est équipé d'un système pneumatique comprenant un réservoir 35 de stockage d'air comprimé et une électrovalve 36 pour réguler la pression à l'intérieur des coussins de suspension 34. Le système pneumatique comprend également une conduite d'admission 38 reliant le réservoir 35 à l'électrovalve 36, des conduites de distribution 40 reliant l'électrovalve 36 aux coussins de suspension 34, et une conduite d'évacuation 42 de l'air à l'extérieur du véhicule branchée sur l'électrovalve 36.

L'électrovalve 36 permet d'assurer une distribution d'air comprimé en provenance du réservoir 35 aux coussins de suspension 34 pour obtenir leur remplissage. L'électrovalve 36 permet aussi d'assurer la vidange des coussins de suspension 34 vers l'extérieur. L'électrovalve 36 comprend plusieurs électrovalves indépendantes (non représentées) qui sont associées à l'intérieur d'un même carter. A titre d'exemple non limitatif, une électrovalve dite ECAS peut être utilisée.

Le système pneumatique du véhicule comprend également une unité de contrôle électronique 44 permettant de piloter de manière automatique l'électrovalve 36 afin de remplir ou vider les coussins de suspension 34. L'unité de contrôle électronique 44 peut par exemple être l'unité d'un système de freinage à commande électronique du véhicule. De manière connue en soi, un tel système de freinage comprend des capteurs de mesure (non représentés) de la pression des coussins de suspension 34 et de la pression de freinage, et des capteurs de mesure de la vitesse de rotation des roues 13.

L'unité de contrôle électronique 44 comprend les moyens matériels et logiciels pour piloter l'électrovalve 36 en fonction des informations mesurées par les capteurs de mesure de la pression des coussins de suspension 34. L'unité de contrôle électronique est reliée à l'électrovalve 36 par l'intermédiaire d'une connexion 46 illustrée schématiquement en pointillés. La connexion 46 peut par exemple être de type filaire ou radioélectrique ou encore être réalisée par l'intermédiaire de bus de communication. Si l'unité de contrôle électronique 44 est l'unité du système de freinage à commande électronique du véhicule alors elle permet également de piloter des électrovalves (non représentées) qui régulent la pression de freinage appliquée aux roues 13 en fonction des informations mesurées par les capteurs de mesure de la pression de freinage et de la vitesse de rotation desdites roues.

De sorte à permettre un réglage manuel de la hauteur du châssis par rapport aux essieux par remplissage ou vidange des coussins de suspension 34, le véhicule comprend également un moyen de commande 48 à activation manuelle pour actionner le système pneumatique. Le moyen de commande 48 peut par exemple être prévu à l'intérieur de la carrosserie, par exemple à l'arrière de celle-ci. Le moyen de commande 48 peut par exemple comprendre un premier bouton-poussoir pour que l'utilisateur du véhicule puisse commander une montée du châssis 12 et un deuxième bouton-poussoir pour commander la descente de ce dernier. Le moyen de commande 48 peut par exemple se présenter sous la forme d'un boitier encastré dans l'un des flancs de la carrosserie ou d'une télécommande.

En se référant de nouveau aux figures 1 à 3, le véhicule comprend encore un hayon élévateur 50 pour faciliter le chargement de marchandises à l'intérieur de l'espace de chargement 22 de la carrosserie et leur déchargement. Le hayon élévateur 50 est installé à l'arrière de la carrosserie 10.

Comme cela sera décrit plus en détail par la suite, le véhicule comprend également une unité de commande 51 électronique permettant d'empêcher un réglage manuel de la hauteur du châssis 12 lorsque le hayon élévateur 50 est sorti. Dans l'exemple de réalisation illustré, l'unité de commande 51 est fixée sur la face avant 20 de la carrosserie du côté de l'espace de chargement 22. Alternativement, d'autres montages de l'unité de commande 51 sont possibles. Cette unité pourrait par exemple être encastrée dans le plancher 18 de la carrosserie. L'unité de commande 51 peut se présenter sous la forme d'une carte de circuit imprimé.

Le hayon élévateur 50 du véhicule comprend une plateforme ou plateau 52, deux bras 54 de maintien du plateau et des moyens d'actionnement, ici des vérins 56 pour obtenir le déplacement du plateau 52. Chaque bras 54 est articulé à l'une de ses extrémités sur le plateau 52 et à l'autre extrémité sur une poutre transversale (non référencée) du châssis. Chaque vérin 56 est articulé à l'un des bras 54 et à l'autre extrémité sur ladite poutre transversale du châssis. Les vérins 56 s'étendent parallèlement aux bras 54.

Le hayon élévateur 50 est mobile entre une position inactive de rangement (figures 1 et 2) appelée généralement position de transport, et une position active de sortie. Des glissières de rangement (non référencées) sont prévues sur le châssis 12 pour permettre le déplacement du hayon élévateur.

Dans l'exemple de réalisation illustré, dans la position de rangement, le plateau 52 du hayon élévateur est situé en-dessous du plancher 18 de la carrosserie. Par exemple, dans la position de rangement, le hayon élévateur 50 peut faire office de barre anti-encastrement. Dans la position illustrée à la figure 3, le plateau 52 du hayon élévateur est situé à l'arrière de l'accès arrière à l'espace de chargement 22 dans une position relevée dans laquelle il est situé sensiblement au niveau du plancher 18. Le plateau 52 peut être abaissé dans une position d'appui contre le sol.

Le hayon élévateur 50 comprend également un boitier de commande (non représenté) monté à l'arrière de la carrosserie 10 et fixé sous le plancher 18. Le boitier de commande comprend un organe électrique à clé de contact pour autoriser l'alimentation électrique du hayon élévateur, et des moyens de commande pour commander manuellement le rangement ou le déploiement du plateau 52. Les moyens de commande peuvent par exemple être des boutons-poussoirs prévus sur le boitier de commande et/ou une télécommande reliée audit boitier.

Le véhicule comprend également un moyen détecteur de position 60 (représenté schématiquement aux figures 1 et 2) pour détecter si le hayon élévateur 50 est ou non dans sa position de rangement. Le moyen détecteur de position 60 peut par exemple être un contacteur fixé sur les glissières de rangement du hayon élévateur 50 pour assurer une continuité électrique lorsque le plateau 52 est situé en-dessous du plancher 18 de la carrosserie dans la position de rangement. Lorsque le hayon élévateur 50 est dans la position de rangement, le contact électrique du contacteur est à l'état fermé et délivre un signal représentatif de l'état rangé (un « 1 » logique). A l'inverse, lorsque le hayon élévateur 50 est dans la position de sortie et n'est donc pas à sa position de rangement, le contact électrique du contacteur est à l'état ouvert et délivre un signal représentatif d'un état activé (un « 0 » logique). Alternativement, le moyen détecteur de position 60 pourrait comprendre un autre type de capteur, par exemple un capteur magnétique du type à effet Hall, un capteur optique, un capteur ultrason, etc.

Le moyen détecteur de position 60 est relié à l'unité de commande 51 électronique par l'intermédiaire d'une connexion 62 illustrée schématiquement en pointillés. La connexion 62 peut par exemple être de type filaire ou radioélectrique ou encore être réalisée par l'intermédiaire de bus de communication. Les signaux émis par le moyen détecteur de position 60 et transmis à l'unité de commande 51 sont représentatifs de la position du hayon élévateur 50.

L'unité de commande 51 électronique reçoit également en entrée des signaux d'activation représentatifs d'ordres de commande manuelle de la hauteur du châssis qui sont délivrés par le moyen de commande 48. Un contact électrique, par exemple un relais électrique bistable, est associé à chaque bouton-poussoir du moyen de commande 48 et délivre un signal d'activation (un état logique « 1 ») à l'entrée correspondante de l'unité de commande 51 lorsque l'utilisateur actionne ce bouton-poussoir pour commander manuellement la descente ou la montée du châssis 12. Ces signaux d'activation sont transmis à l'unité de commande 51 par l'intermédiaire d'une connexion 64 illustrée schématiquement en pointillés.

L'unité de commande 51 électronique est également reliée à l'unité de contrôle électronique 44 par l'intermédiaire d'une connexion 66 illustrée schématiquement en pointillés. La connexion 64, respectivement 66, peut par exemple être de type filaire ou radioélectrique ou encore être réalisée par l'intermédiaire de bus de communication.

L'unité de commande 51 comprend les moyens matériels et logiciels pour transmettre, à l'unité de contrôle électronique 44, les ordres de commande de l'utilisateur pour modifier la hauteur du châssis uniquement si le hayon élévateur est dans sa position de rangement.

Par exemple, l'unité de commande 51 comprend un circuit de commande et une porte logique ET dont une première entrée est soumise aux signaux issus du moyen détecteur de position 60 et une deuxième entrée est soumise aux signaux issus du moyen de commande 48, et dont une sortie est reliée au circuit de commande.

Lorsque le hayon élévateur est dans sa position de rangement et que l'utilisateur commande la descente ou la montée du châssis 12 via le moyen de commande 48, les entrées correspondantes de la porte ET sont chacune à l'état logique « 1 ». La sortie de la porte ET est donc aussi à l'état logique « 1 » et le circuit de commande de l'unité de commande 51 émet un signal de commande qui est délivré à l'unité de contrôle électronique 44 pour piloter l'électrovalve 36. Une loi de commande est par exemple mémorisée dans le circuit de commande de l'unité de commande 51, par exemple sous la forme d'un logiciel programmé.

A partir de ce signal de commande de l'unité de commande 51, l'unité de contrôle électronique 44 pilote le fonctionnement de l'électrovalve 36 dans une position permettant la vidange ou le remplissage des coussins de suspension 34 selon l'ordre de commande de l'utilisateur.

A l'inverse, lorsque le hayon élévateur est dans sa position de sortie et que l'utilisateur commande la descente ou la montée du châssis 12 par l'intermédiaire du moyen de commande 48, seule l'entrée de la porte ET correspondante à l'activation de ce moyen de commande 48 est à l'état logique « 1 », l'entrée de la porte ET correspondante à la position du hayon élévateur étant à l'état logique « 0 ». La sortie de la porte ET est ainsi à l'état logique « 0 » et le circuit de commande de l'unité de commande 51 n'émet aucun signal de commande en direction de l'unité de contrôle électronique 44. Ainsi, les ordres de commande de l'utilisateur pour modifier manuellement la hauteur du châssis 12 ne sont pas transmis par l'unité de commande 51 à l'unité de contrôle électronique 44 et la position de l'électrovalve 36 reste inchangée.

Ainsi, lorsque le hayon élévateur est dans sa position de sortie et que l'utilisateur actionne manuellement le moyen de commande 48 pour commander la descente ou la montée du châssis 12, l'unité de commande 51 permet de rendre inopérant cet actionnement du moyen de commande 48 dans la mesure où les ordres de commande de l'utilisateur ne sont pas transmis à l'unité de contrôle électronique 44. La vidange ou le remplissage des coussins de suspension 34 est ainsi empêché.

Dans l'exemple de réalisation illustré, le moyen de commande 48 à actionnement manuel qui permet de régler la hauteur du châssis du véhicule est séparé de l'électrovalve 36.

En variante, l'électrovalve 36 du système pneumatique peut être équipée d'un levier rotatif pour commander ce réglage manuel en hauteur du châssis. Dans ce cas, le levier d'actionnement de l'électrovalve 36 est mobile entre une première position dite de baisse permettant de commander une vidange des coussins de suspension, une deuxième position dite de monte permettant de commander un remplissage des coussins de suspension, et une troisième position neutre dite d'arrêt dans laquelle l'unité de contrôle électronique 44 peut piloter le fonctionnement de l'électrovalve 36.

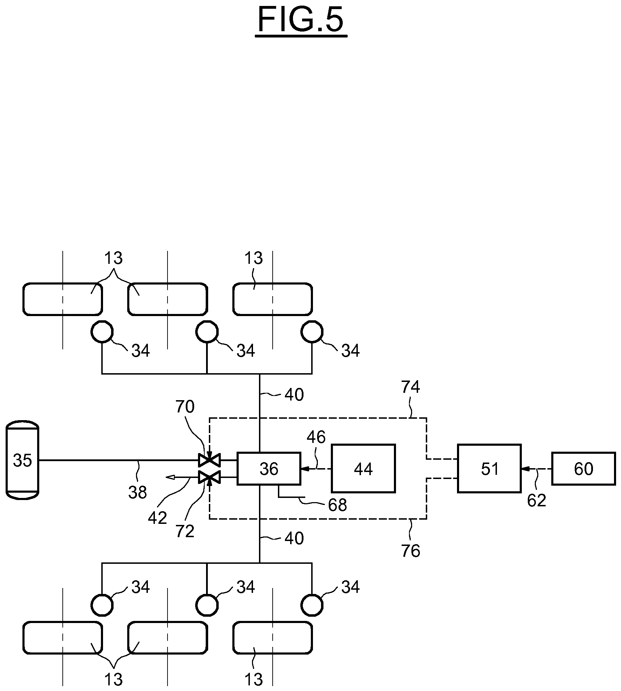

Comme illustré à la figure 5, sur laquelle les éléments identiques portent les mêmes références, avec une telle électrovalve 36 équipée d'un levier 68 à actionnement manuel, le système pneumatique comprend en outre des première et deuxième électrovalves 70, 72 d'isolement prévues sur les conduites du système. Dans l'exemple de réalisation illustré, la première électrovalve 70 est montée sur la conduite d'admission 38 reliant le réservoir 35 à l'électrovalve 36 de régulation, et la deuxième électrovalve 72 est montée sur la conduite d'évacuation 42. Les électrovalves 70, 72 d'isolement sont normalement ouvertes, i.e. permettent le passage de l'air dans leur position de repos.

L'unité de commande 51 électronique pilote le fonctionnement des électrovalves 70 et 72, par l'intermédiaire de connexions 74, 76 illustrées schématiquement en pointillés, en fonction des signaux transmis par le moyen de détection 60 de la position du hayon élévateur.

Lorsque l'unité de commande 51 électronique reçoit du moyen de détection 60 un signal représentatif de la position de sortie du hayon élévateur, l'unité de commande émet un signal de commande pour la fermeture des électrovalves 70, 72 d'isolement. Ainsi, si l'utilisateur actionne manuellement le levier 68 de l'électrovalve 36 pour commander la descente ou la montée du châssis 12, les coussins de suspension 34 restent isolés de la conduite d'évacuation 42 et de la conduite d'admission 38. L'unité de commande 51 et les électrovalves 70, 72 permettent donc de rendre inopérant l'actionnement du levier 68 de l'électrovalve de régulation sur la quantité d'air à l'intérieur des coussins de suspension 34.

A l'inverse, lorsque l'unité de commande 51 électronique reçoit du moyen de détection 60 un signal représentatif de la position de rangement du hayon élévateur, l'unité de commande n'émet aucun signal de commande vers les électrovalves 70, 72 qui sont en position ouverte en l'absence de signal. Dans ce cas, si l'utilisateur actionne manuellement le levier 68 de l'électrovalve 36, la descente ou la montée du châssis 12 est obtenue.

Dans cet exemple de réalisation, l'électrovalve 70 d'isolement est montée sur la conduite d'admission 38, et l'électrovalve 72 d'isolement est montée sur la conduite d'évacuation 42 pour isoler les coussins de suspension 34 respectivement du réservoir 35 de stockage et de la conduite d'évacuation 42. Alternativement, il est possible de prévoir d'autres dispositions, par exemple un montage des électrovalves d'isolement sur les conduites de distribution 40 du système pneumatique.

Dans les deux exemples de réalisation précédemment décrits, le système pneumatique pour le remplissage et la vidange des coussins de suspension est à régulation électronique et comprend l'électrovalve 36 et l'unité de contrôle 44 pour cette régulation automatique.

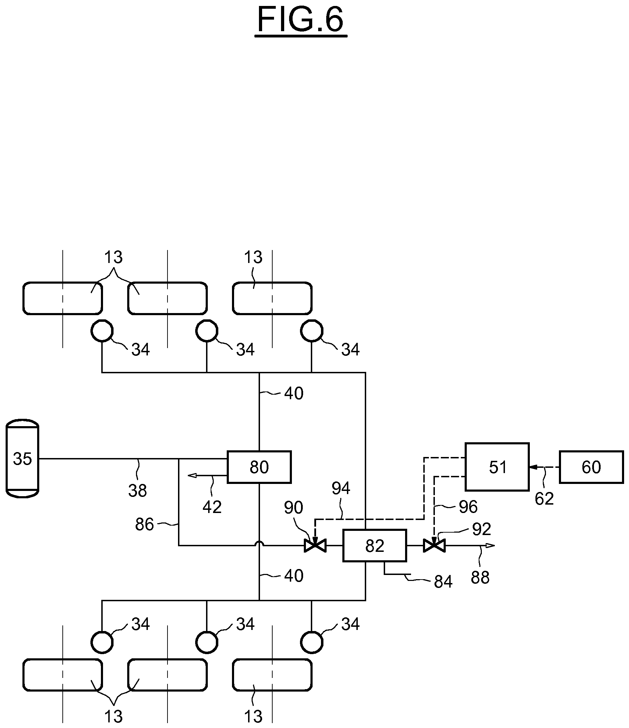

Dans l'exemple de réalisation illustré à la figure 6, sur laquelle les éléments identiques portent les mêmes références, l'électrovalve de régulation du système pneumatique est remplacée par une valve 80 de nivellement qui est commandée par un levier de commande (non représenté) relié aux essieux du véhicule par un système de tringlerie. La valve 80 de nivellement permet d'assurer une régulation automatique du remplissage et de la vidange des coussins de suspension 34.

Le système pneumatique comprend également une valve 82 à actionnement manuel qui est montée en parallèle de la valve 80 de nivellement. La valve 82 est généralement nommée « valve monte-et-baisse ». La valve 82 comprend un levier 84 rotatif pour permettre son actionnement. La valve 82 est mobile entre une première position dite de baisse permettant de commander une vidange des coussins de suspension, une deuxième position dite de monte permettant de commander un remplissage des coussins de suspension, et une troisième position neutre dite d'arrêt.

Le système pneumatique comprend une conduite de dérivation 86 qui est piquée sur la conduite d'admission 38 en amont de la valve 80 de nivellement et qui se raccorde aux conduites de distribution 40. La valve 82 est montée sur la conduite de dérivation 86. Le système pneumatique comprend encore une conduite d'évacuation 88 de l'air à l'extérieur du véhicule branchée sur la valve 82.

Le système pneumatique comprend également des première et deuxième électrovalves 90, 92 d'isolement pour isoler les coussins de suspension 34 respectivement du réservoir 35 de stockage et de la conduite d'évacuation 88 en cas d'activation de la valve 82. Dans l'exemple de réalisation illustré, la première électrovalve 90 est montée sur la conduite de dérivation 86 en amont de la valve 82, et la deuxième électrovalve 92 est montée sur la conduite d'évacuation 88. Les électrovalves 90, 92 d'isolement sont normalement ouvertes, i.e. permettent le passage de l'air dans leur position de repos.

L'unité de commande 51 électronique pilote les électrovalves 90, 92 en fonction des signaux transmis par le moyen de détection 60 de la position du hayon élévateur, par l'intermédiaire de connexions 94, 96 illustrées schématiquement en pointillés.

Lorsque l'unité de commande 51 électronique reçoit du moyen de détection 60 un signal représentatif de la position de sortie du hayon élévateur, l'unité de commande émet un signal de commande pour la fermeture des électrovalves 90, 92 d'isolement. Ainsi, si l'utilisateur actionne manuellement le levier 84 de la valve 82 pour commander la descente ou la montée du châssis 12, les coussins de suspension 34 restent isolés de la conduite d'évacuation 88 et de la conduite d'admission 38. L'unité de commande 51 et les électrovalves 90, 92 permettent donc de rendre sans effet l'actionnement du levier 84 de l'électrovalve de régulation sur la pression des coussins de suspension 34.

A l'inverse, lorsque l'unité de commande 51 électronique reçoit du moyen de détection 60 un signal représentatif de la position de rangement du hayon élévateur, l'unité de commande n'émet aucun signal de commande vers les électrovalves 90, 92 qui sont en position ouverte en l'absence de signal. Dans ce cas, si l'utilisateur actionne manuellement le levier 84 de la valve 82, la descente ou la montée du châssis 12 est obtenue.

Dans les exemples de réalisation décrits, les moyens d'inhibition, qui sont aptes à rendre sans effet l'actionnement du moyen de commande 48, 68, 82 à activation manuelle lorsque le hayon élévateur 50 n'est pas dans sa position de rangement, sont prévus pour empêcher la vidange et le remplissage des coussins de suspension. En variante, les moyens d'inhibition pourraient être prévus pour empêcher uniquement la vidange des coussins de suspension.

Dans les exemples de réalisation illustrés, le véhicule est équipé d'un hayon élévateur situé en-dessous du plancher de la carrosserie dans sa position de rangement. Un tel type hayon élévateur est généralement nommé « hayon rétractable ». L'invention n'est pas limitée à l'utilisation d'un type particulier de hayon. Par exemple, le véhicule peut être équipé d'un hayon élévateur dit « hayon relevable » qui vient en appui contre le dispositif de fermeture de l'accès arrière de la carrosserie ou forme ce dispositif de fermeture dans la position de rangement.

## Revendications

1. Véhicule routier de transport de marchandises comprenant :
- un châssis (12),
- au moins un essieu (28) monté sur le châssis et supportant des roues,
- au moins deux suspensions pneumatiques (30) supportant ledit essieu et comprenant chacune un coussin de suspension (34),
- un système pneumatique comprenant au moins un réservoir (35) de stockage de gaz et des moyens (36, 44 ; 80) pour réguler automatiquement le remplissage des coussins de suspension avec ledit gaz et la vidange desdits coussins de suspension, et
- un moyen de commande (48 ; 68 ; 82) à actionnement manuel pour actionner le système pneumatique, **caractérisé en ce que** le véhicule comprend en outre :
- un hayon élévateur (50) mobile entre une position de rangement et une position de sortie,
- au moins un moyen de détection (60) pour détecter la position de rangement et/ou la position de sortie du hayon élévateur, et
- des moyens d'inhibition (51 ; 51, 72 ; 44 ; 51, 92) pour rendre inopérant, en présence d'un signal du moyen de détection (60) représentatif de la position de sortie du hayon élévateur, l'actionnement manuel du moyen de commande (48 ; 68 ; 82) pour empêcher au moins la vidange des coussins de suspension.

2. Véhicule selon la revendication 1, dans lequel les moyens d'inhibition (51 ; 51, 72 ; 44 ; 51, 92) sont aptes à rendre inopérant, en présence dudit signal représentatif de la position de sortie du hayon élévateur, l'actionnement manuel du moyen de commande (48 ; 68 ; 82) pour empêcher la vidange et le remplissage des coussins de suspension.

3. Véhicule selon la revendication 1 ou 2, dans lequel les moyens de régulation du système pneumatique comprennent au moins une électrovalve (36) de régulation et une unité de contrôle électronique (44) pour le pilotage de ladite électrovalve de régulation.

4. Véhicule selon la revendication 3, dans lequel les moyens d'inhibition comprennent une unité de commande (51) électronique apte, en présence d'un signal d'activation du moyen de commande (48) à actionnement manuel, à délivrer à l'unité de contrôle électronique (44) du système pneumatique un signal de commande pour le pilotage de ladite électrovalve (36) de régulation uniquement en présence d'un signal du moyen de détection (60) représentatif de la position de rangement du hayon élévateur.

5. Véhicule selon la revendication 4, dans lequel l'unité de commande (51) électronique reçoit en entrée ledit signal d'activation du moyen de commande (48) à actionnement manuel.

6. Véhicule selon la revendication 3, dans lequel l'électrovalve (36) de régulation est équipée d'un levier (68) à actionnement manuel formant ledit moyen de commande, et dans lequel les moyens d'inhibition comprennent au moins une électrovalve (72) d'isolement normalement ouverte, et une unité de commande (51) électronique pour piloter ladite électrovalve (72) d'isolement et apte à l'activer, en présence dudit signal représentatif de la position de sortie du hayon élévateur, pour isoler les coussins de suspension d'une conduite d'évacuation (42) des gaz à l'extérieur.

7. Véhicule selon la revendication 3, dans lequel des signaux d'activation émis par le moyen de commande (48) à actionnement manuel sont transmis à l'unité de contrôle électronique (44), l'unité de contrôle électronique étant apte à piloter ladite électrovalve (36) de régulation dans un position empêchant au moins la vidange des coussins de suspension uniquement en présence d'un signal du moyen de détection (60) représentatif de la position de rangement du hayon élévateur, ladite unité de contrôle électronique formant les moyens d'inhibition.

8. Véhicule selon la revendication 7, dans lequel les signaux émis par le moyen de détection (60) sont transmis à l'unité de contrôle électronique (44).

9. Véhicule selon la revendication 1 ou 2, dans lequel les moyens de régulation du système pneumatique comprennent au moins une valve (80) de nivellement qui est reliée audit essieu par l'intermédiaire d'une tringlerie, le système pneumatique comprenant en outre une valve (82) à actionnement manuel formant ledit moyen de commande.

10. Véhicule selon la revendication 9, dans lequel les moyens d'inhibition comprennent au moins une électrovalve (92) d'isolement normalement ouverte, et une unité de commande (51) électronique pour piloter ladite électrovalve (92) d'isolement et apte à l'activer, en présence dudit signal représentatif de la position de sortie du hayon élévateur, pour isoler les coussins de suspension d'une conduite d'évacuation (88) des gaz à l'extérieur.

11. Véhicule selon l'une quelconque des revendications 4 à 6 ou 10, dans lequel les signaux émis par le moyen de détection (60) sont transmis à l'unité de commande (51) électronique.

12. Procédé de pilotage d'un système de suspension pneumatique d'un véhicule routier de transport de marchandises équipé d'un hayon élévateur mobile entre une position de rangement et une position de sortie, le procédé comprenant les étapes suivantes :
- détecter la position de rangement et/ou la position de sortie du hayon élévateur,
- empêcher la vidange des coussins de suspension du système en cas d'actionnement manuel dudit système lorsque le hayon élévateur est dans la position de sortie.

13. Procédé selon la revendication 12 , comprenant en outre
l'étape :
- empêcher le remplissage des coussins de suspension du système en cas d'actionnement manuel dudit système lorsque le hayon élévateur est dans la position de sortie.

## Patentansprüche

1. Straßenfahrzeug für den Transport von Waren, umfassend:
- ein Fahrgestell (12),
- mindestens eine Achse (28), die an dem Fahrgestell montiert ist und Räder trägt,
- mindestens zwei Luftfederungen (30), die die Achse tragen und jeweils ein Federungskissen (34) umfassen,
- eine Luftanlage, mindestens einen Speicher (35) zum Lagern von Gas und Mittel (36, 44; 80) zum automatischen Regeln des Füllens der Federungskissen mit dem Gas und des Leerens der Federungskissen umfassend, und
- ein Steuerungsmittel (48; 68; 82) zur manuellen Betätigung zum Betätigen der Luftanlage, **dadurch gekennzeichnet, dass** das Fahrzeug weiter umfasst:
- eine Heckklappe mit Hubmechanismus (50), die zwischen einer Ablageposition und einer Ausgangsposition beweglich ist,
- mindestens ein Detektionsmittel (60) zum Detektieren der Ablageposition und/oder der Ausgangsposition der Heckklappe mit Hubmechanismus, und
- Sperrmittel (51; 51, 72; 44; 51, 92), um bei einem anstehenden Signal des Detektionsmittels (60), das repräsentativ für die Ausgangsposition der Heckklappe mit Hubmechanismus ist, die manuelle Betätigung des Steuerungsmittels (48; 68; 82) unwirksam zu machen, um mindestens das Leeren der Federungskissen zu verhindern.

2. Fahrzeug nach Anspruch 1, wobei die Sperrmittel (51; 51, 72; 44; 51, 92) imstande sind, bei dem anstehenden Signal, das repräsentativ für die Ausgangsposition der Heckklappe mit Hubmechanismus ist, die manuelle Betätigung des Steuerungsmittels (48; 68; 82) unwirksam zu machen, um das Leeren und das Füllen der Federungskissen zu verhindern.

3. Fahrzeug nach Anspruch 1 oder 2, wobei die Regelungsmittel der Luftanlage mindestens ein Regelungsmagnetventil (36) und eine elektronische Kontrolleinheit (44) zur Ansteuerung des Regelungsmagnetventils umfassen.

4. Fahrzeug nach Anspruch 3, wobei die Sperrmittel eine elektronische Steuerungseinheit (51) umfassen, die imstande ist, bei einem anstehenden Aktivierungssignal des Steuerungsmittels (48) mit manueller Betätigung der elektronischen Kontrolleinheit (44) der Luftanlage ein Steuerungssignal zum Ansteuern des Regelungsmagnetventils (36) nur bei einem anstehenden Signal des Detektionsmittels (60), das für die Ablageposition der Heckklappe mit Hubmechanismus repräsentativ ist, zu liefern.

5. Fahrzeug nach Anspruch 4, wobei die elektronische Steuerungseinheit (51) am Eingang das Aktivierungssignal des Steuerungsmittels (48) mit manueller Betätigung empfängt.

6. Fahrzeug nach Anspruch 3, wobei das Regelungsmagnetventil (36) mit einem Hebel (68) zur manuellen Betätigung ausgerüstet ist, der das Steuerungsmittel bildet, und wobei die Sperrmittel mindestens ein Schließer-Trennventil (72) umfassen, und eine elektronische Steuerungseinheit (51) zum Ansteuern des Trennventils (72) und imstande, um es bei dem anstehenden Signal, das für die Ausgangsposition der Heckklappe mit Hubmechanismus repräsentativ ist, zu aktivieren, um die Federungskissen von einer Ablaufleitung (42) der Gase nach außen zu trennen.

7. Fahrzeug nach Anspruch 3, wobei vom Steuerungsmittel (48) mit manueller Betätigung ausgegebene Aktivierungssignale zur elektronischen Kontrolleinheit (44) übertragen werden, wobei die elektronische Kontrolleinheit imstande ist, das Regelungsmagnetventil (36) in einer Position anzusteuern, die mindestens das Leeren der Federungskissen nur bei einem anstehenden Signal des Detektionsmittels (60), das repräsentativ für die Ablageposition der Heckklappe mit Hubmechanismus ist, verhindert, wobei die elektronische Kontrolleinheit die Sperrmittel bildet.

8. Fahrzeug nach Anspruch 7, wobei die von dem Detektionsmittel (60) ausgegebenen Signale zur elektronischen Kontrolleinheit (44) übertragen werden.

9. Fahrzeug nach Anspruch 1 oder 2, wobei die Regelungsmittel der Luftanlage mindestens ein Nivellierungsventil (80) umfassen, das über ein Gestänge mit der Achse verbunden ist, wobei die Luftanlage weiter ein Ventil (82) mit manueller Betätigung umfasst, welches das Steuerungsmittel bildet.

10. Fahrzeug nach Anspruch 9, wobei die Sperrmittel mindestens ein Schließer-Trennmagnetventil (92) umfassen und eine elektronische Steuerungseinheit (51), um das Trennmagnetventil (92) anzusteuern, und imstande, um es bei dem anstehenden Signal, das repräsentativ für die Ausgangsposition der Heckklappe mit Hubmechanismus ist, zu aktivieren, um die Federungskissen von einer Ablaufleitung (88) der Gase nach außen zu trennen.

11. Fahrzeug nach einem der Ansprüche 4 bis 6, oder 10, wobei die von dem Detektionsmittel (60) ausgegebenen Signale zur elektronischen Steuerungseinheit (51) übertragen werden.

12. Verfahren zum Ansteuern einer Luftfederungsanlage eines Straßenfahrzeugs für den Transport von Waren, das mit einer Heckklappe mit Hubmechanismus ausgerüstet ist, die zwischen einer Ablageposition und einer Ausgangsposition beweglich ist, wobei das Verfahren die folgenden Schritte umfasst:
- Detektieren der Ablageposition und/oder der Ausgangsposition der Heckklappe mit Hubmechanismus,
- Verhindern des Leerens der Federungskissen der Anlage im Falle einer manuellen Betätigung der Anlage, wenn die Heckklappe mit Hubmechanismus in der Ausgangsposition ist.

13. Verfahren nach Anspruch 12, weiter den folgenden Schritt umfassend:
- Verhindern des Füllens der Federungskissen der Anlage im Falle einer manuellen Betätigung der Anlage, wenn die Heckklappe mit Hubmechanismus in der Ausgangsposition ist.

## Claims

1. A road vehicle for transporting goods comprising:
- a chassis (12),
- at least one axle (28) mounted on the chassis and supporting wheels,
- at least two pneumatic suspensions (30) supporting said axle and each comprising a suspension bag (34),
- a pneumatic system comprising at least one gas storage tank (35) and means (36, 44; 80) for automatically regulating the filling of the suspension bags with said gas and the emptying of said suspension bags, and
- a manual actuation control means (48; 68; 82) for actuating the pneumatic system, **characterised in that** the vehicle further comprises:
- a tail lift (50) movable between a stowed position and an extended position,
- at least one detection means (60) for detecting the stowed position and/or the extended position of the tail lift, and
- inhibition means (51; 51, 72; 44; 51, 92) for rendering the manual actuation of the control means (48; 68; 82) inoperative, in the presence of a signal from the detection means (60) representative of the extended position of the tail lift, to prevent at least the emptying of the suspension bags.

2. The vehicle according to claim 1, wherein the inhibition means (51; 51, 72; 44; 51, 92) are capable of rendering the manual actuation of the control means (48; 68; 82) inoperative, in the presence of said signal representative of the extended position of the tail lift, to prevent the emptying and the filling of the suspension bags.

3. The vehicle according to claim 1 or 2, wherein the regulation means of the pneumatic system comprise at least one regulation solenoid valve (36) and an electronic monitoring unit (44) for driving said regulation solenoid valve.

4. The vehicle according to claim 3, wherein the inhibition means comprise an electronic control unit (51) capable, in the presence of an activation signal of the manually actuated control means (48), of providing a control signal to the electronic monitoring unit (44) of the pneumatic system for driving said regulation solenoid valve (36) only in the presence of a signal from the detection means (60) representative of the stowed position of the tail lift.

5. The vehicle according to claim 4, wherein the electronic control unit (51) receives as input said activation signal from the manually actuated control means (48).

6. The vehicle according to claim 3, wherein the regulation solenoid valve (36) is equipped with a manually actuated lever (68) forming said control means, and wherein the inhibition means comprise at least one normally open isolation solenoid valve (72), and an electronic control unit (51) for driving said isolation solenoid valve (72) and capable of activating it, in the presence of said signal representative of the extended position of the tail lift, to isolate the suspension bags from a pipe (42) for exhausting gases to the outside.

7. The vehicle according to claim 3, wherein activation signals emitted by the manually actuated control means (48) are transmitted to the electronic monitoring unit (44), the electronic monitoring unit being capable of driving said regulation solenoid valve (36) in a position preventing at least the emptying of the suspension bags only in the presence of a signal from the detection means (60) representative of the stowed position of the tail lift, said electronic monitoring unit forming the inhibition means.

8. The vehicle according to claim 7, wherein the signals emitted by the detection means (60) are transmitted to the electronic monitoring unit (44).

9. The vehicle according to claim 1 or 2, wherein the regulation means of the pneumatic system comprise at least one levelling valve (80) which is connected to said axle via a linkage, the pneumatic system further comprising a manually actuated valve (82) forming said control means.

10. The vehicle according to claim 9, wherein the inhibition means comprise at least one normally open isolation solenoid valve (92), and an electronic control unit (51) for driving said isolation solenoid valve (92) and capable of activating it, in the presence of said signal representative of the extended position of the tail lift, to isolate the suspension bags from a pipe (88) for exhausting gases to the outside.

11. The vehicle according to any one of claims 4 to 6 or 10, wherein the signals emitted by the detection means (60) are transmitted to the electronic control unit (51).

12. A method for driving a pneumatic suspension system of a road vehicle for transporting goods equipped with a tail lift movable between a stowed position and an extended position, the method comprising the following steps:
- detecting the stowed position and/or the extended position of the tail lift,
- preventing the suspension bags of the system from being emptied in case of manual actuation of said system when the tail lift is in the extended position.

13. The method according to claim 12, further comprising the step:
- preventing the suspension bags of the system from being filled in case of manual actuation of said system when the tail lift is in the extended position.
